(19) **Europäisches Patentamt / European Patent Office / Office européen des brevets**

(11) **EP 4 296 645 B1**

(12) **EUROPEAN PATENT SPECIFICATION**

(45) Date of publication and mention
of the grant of the patent:
**29.04.2026  Bulletin 2026/18**

(21) Application number: **22180990.8**

(22) Date of filing: **24.06.2022**

(51) International Patent Classification (IPC):
**G01N 15/02** *(2024.01)*      **G01N 15/10** *(2024.01)*
**B01L 3/00** *(2006.01)*        **C12N 15/10** *(2006.01)*
**G01N 15/14** *(2024.01)*

(52) Cooperative Patent Classification (CPC):
**G01N 15/0205; G01N 15/10; G01N 15/14;**
G01N 2015/012; G01N 2015/1413;
G01N 2203/0089; G01N 2203/0094

(54) **METHOD AND APPARATUS FOR DETERMINING RHEOLOGICAL PROPERTIES OF DEFORMABLE BODIES**

VERFAHREN UND VORRICHTUNG ZUM BESTIMMEN DER RHEOLOGISCHEN EIGENSCHAFTEN VERFORMBARER KÖRPER

PROCÉDÉ ET APPAREIL PERMETTANT DE DÉTERMINER LES PROPRIÉTÉS RHÉOLOGIQUES DE CORPS DÉFORMABLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**27.12.2023  Bulletin 2023/52**

(73) Proprietor: **Max-Planck-Gesellschaft zur Förderung der Wissenschaften e.V.**
**80539 München (DE)**

(72) Inventors:
• **HOFEMEIER ABU HATTUM, Shada**
**91052 Erlangen (DE)**
• **REICHEL, Felix**
**91052 Erlangen (DE)**

• **GUCK, Jochen Reinhold**
**91052 Erlangen (DE)**
• **ZABURDAEV, Vasily**
**91054 Erlangen (DE)**
• **KUAN, Hui-Shun**
**Taipei City 115008 (TW)**

(74) Representative: **Hoffmann Eitle**
**Patent- und Rechtsanwälte PartmbB**
**Arabellastraße 30**
**81925 München (DE)**

(56) References cited:
WO-A1-2019/006188      CN-A- 111 744 565
US-A1- 2003 097 040    US-A1- 2012 315 690
US-A1- 2016 202 172    US-A1- 2019 085 324
US-A1- 2020 284 713

## Description

Technical Field

The present invention relates to a method for determining rheological properties of deformable bodies and for an apparatus arranged for such a determination.

Technical Background

Interrogating the mechanical behaviour of materials is of great significance for understanding the relation between their structure and function. For instance, the elastic behaviour of a rubber band originates from entropic stretching of its constituent polyisoprene molecules. The shear-thickening properties of corn starch imply existence of dynamically jammed structures [1]. And the fluid-like viscous behaviour of cellular aggregates can be linked to intermittent cell-cell interactions [2-4]. Most materials, when observed at different time scales, will exhibit different mechanical behaviours. This phenomenon, attributed as viscoelasticity, has been studied extensively with the aim of unravelling complex mechanical properties and exploring novel materials [5]. Characterizing mechanical properties has also been at the front line of biophysical research. Elucidating elastic and viscous properties of biological matter has led to significant insights into understanding cellular processes, morphogenesis or the role of mechanical properties in disease [6-8].

Mechanical properties of materials are typically quantified via their stress (force per unit area [Pa]) - strain (relative displacement of the material [-]) relationship. To characterize the material response at different time scales, these properties are often represented in the frequency domain. The ratio of the Fourier-transformed stress $\hat{\sigma}(\omega)$ and strain $\hat{\varepsilon}(\omega)$ signal defines:

$$G^*(\omega) = \frac{\hat{\sigma}(\omega)}{\hat{\varepsilon}(\omega)} \qquad (1)$$

Where $\omega$ is the angular frequency. The complex modulus $G^*(\omega)$ is commonly used to describe the viscoelastic behaviour of the materials:

$$G^*(\omega) = G'(\omega) + iG''(\omega), \qquad (2)$$

where G' and G'' are the storage and the loss moduli, respectively.

Measurements of the mechanical properties in the frequency domain are routinely done in oscillatory rheometers but are time-consuming and limited in accessible frequency ranges due to hardware constraints. Additionally, soft, living materials, such as a single cells or tissues, are often too small for probing with traditional rheometers. The size constraints stimulated the development for probing techniques specifically for small length scales (in the range of nm to cm) such as particle microrheology [9, 10], micropipette aspiration [11, 12], atomic force microscopy (AFM) [13, 14], optical stretching [15], and microfluidic techniques [16, 17]. While measuring the mechanical properties in the frequency-domain has been performed at small length scales, some materials measured change their properties as an active response when probed repetitively - a phenomenon known as mechanosensitivity [18-20]. As this change can occur within seconds, applying even a few cycles of oscillatory measurements can lead to probing different mechanical behaviour biased by this active response. Additionally, few of these techniques, such as AFM, suffer in the high frequency range from the effects of inertia and hydrodynamic drag [21], which narrows down the range of reliable frequencies that can be applied.

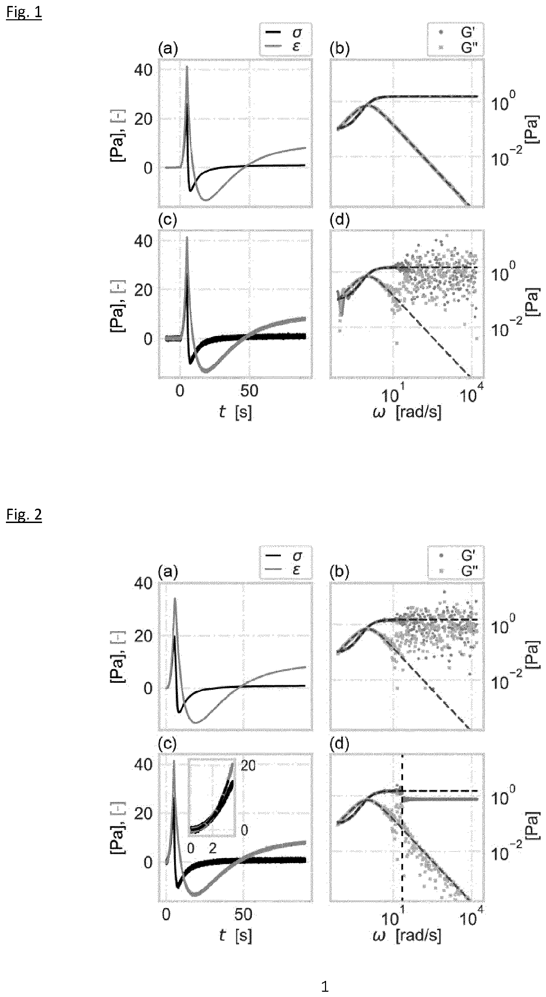

Recent studies have shown that in the high frequency range, the viscous characteristics of cells dominate over the elastic characteristics. This behaviour can be interpreted as a combined contribution of the viscous cytoplasm and the relaxation modes of individual cytoskeleton filaments [22, 23]. Thus, exploring the mechanical properties at high frequencies aids the investigation of the microscopic structural properties of cells that contribute to their mechanics. One approach to overcome these challenges is to perform single time-resolved measurements. Commonly, the time-dependent signals obtained are then fitted to a predefined model such as a Maxwell liquid, a Kelvin-Voigt solid, or a combination of both [24-29]. Fitting a model implicitly prescribes a certain viscoelastic behaviour and limits the exploration of novel properties of specimens studied. To circumvent this, recent efforts have attempted to convert measurements conducted in the time domain to the frequency domain either directly [30] or after fitting to a pre-set function [31]. The caveat, however, is that the measured signals are too complex to be described as a continuous analytical function and are usually accompanied with noise of different origins. Fig. 1 illustrates how even a moderate random noise added on top of the ideal standard linear solid (SLS) stress and strain signals [(a) and (c)] dramatically changes the resultant frequency-dependent moduli [(b) and (d)] calculated from Fourier-transformed signals using Eq. (1) and (2).

In more detail, Fig. 1 shows the viscoelastic behaviour of a simulated standard linear solid material. (a) Ideal stress σ (black) and strain ε (gray) signals of an SLS material are shown as a function of time. (b) Storage G' (dark gray circles) and loss G'' (light gray squares) moduli of an SLS material are calculated from the Fourier transforms of the signals in (a) via Eq. (1). (c) Stress σ and strain ε signals of an SLS material in time are shown accompanied with random noise. (d) Storage G' and loss G'' moduli of SLS material calculated from the Fourier transforms of the signals in (c) are displayed. The dashed gray lines are the noise-free storage and loss moduli. The simulated SLS components are $E_0$=3/2Pa and $E_1$=3/28Pa for the springs and η=45/20Pa s for the dashpot in the spring-dashpot model of the viscoelastic material (SLS model). The sampling frequency is 5000 Hz. The random noise has a zero mean and a standard deviation of 0.25Pa and 0.15 for stress and strain signals, respectively.

US 2016/202172 A1 discloses a method of determining the rheological properties of cells using an optical analysis. US 2003/097040 A1 and US 2019/085324 A1 are further prior art.

Technical Problem

In view of these disadvantages, it is clear that an unbiased approach to extract the complex modulus of materials from a single time-dependent signal without fitting a predefined model is needed.

The inventors have found out that a statistical approach utilising the statistical properties of noise, which has a zero mean and a short-time correlation, and which uses a modified Fourier transform to enhance the signal-to-noise ratio is a solution to the problem.

The invention is thus defined by the independent claims. Preferred embodiments are set out in the respective dependent claims.

According to claim 1, a method for determining the rheological properties of deformable bodies comprises a step of leading the bodies in an immersion fluid through a microfluidic channel. The rheological properties typically describe the complex modulus of the bodies to be analysed. The complex modulus describes the viscoelastic behaviour of the materials and has, as its real and imaginary part, the storage and loss moduli, respectively, as described previously in equation (2). The bodies can be cells, both human and animal/plant cells. They can also be droplets or deformable microscopic beads. Other deformable bodies are also possible. Among those bodies, the use of human and animal cells, preferably human cells, is of particular relevance and is thus preferred. In the case of cells, it is preferred if the cells are individualised cells, that is, cells that are not arranged in clusters of cells that adhere to one another but that are present as individual, non-adhering cells.

By the immersion fluid, a liquid is meant which can immerse those bodies and which can transport them, preferably without changing their properties. In the case of cells, it is preferred that the immersion fluid has a physiological composition so that the immersed cells are not negatively affected by the presence of the fluid. A microfluidic channel is a channel in which surface forces dominate volumetric forces, which thus distinguishes microfluidics from macrofluidics.

It is then measured how those bodies are deformed by the forces that are exerted on the bodies due to the hydrodynamic interactions with the surrounding fluid. Generally, a droplet will, when introduced into a shear flow, be deformed by that flow. By measuring the deformation in dependence on the forces (which can be calculated from the known fluid dynamics inside the channel), the mechanical properties of the bodies can be determined. The measurement can be done by having a camera that images the deformable bodies as they are being led through the channel and, in particular, in those parts of the channel where significant forces are exerted on them by the surrounding fluid.

In order to measure those deformations, one can use, for example, a microscope that is coupled to a digital camera that observes the bodies as they are being led through the channel and as they are being deformed. However, it is also possible to use recorded images which can then be analysed some time after the bodies were led through the channel.

Using the thus obtained deformation, one can measure the rheological properties of the bodies. In particular, one can obtain the force that is exerted on them by comparatively simple fluid dynamics calculations as explained in Dealy, J.M., Wissbrun, K.F. (1999). Extensional Flow Properties and Their Measurement. In: Melt Rheology and Its Role in Plastics Processing. Springer, Dordrecht. https://doi.org/10.1007/978-94-009-2163-4_6. By obtaining the deformation, and by relating it to the forces, the rheological properties of the bodies can be obtained.

According to the invention, the high-frequency rheological properties of the bodies are determined using a truncated Fourier transform. By the high-frequency rheological properties, those properties are meant that are higher than a predetermined threshold frequency. In embodiments, a threshold frequency of 10 rad/sec. was used. A truncated Fourier transform is defined as

$$\hat{\sigma}(\omega, z) = \frac{1}{2\pi} \int_0^\infty dt \sigma(t) e^{-i\omega - zt} \qquad (7)$$

Here, z is a non-negative real number that defines the inverted truncation time.

The inventors have found that using a rolling average gives high quality low-frequency rheological property whilst using a truncated Fourier transform leads to high quality high-frequency rheological property data. The theoretical reasoning is set out below:

Assuming that an experimentally measured time-dependent signal $\sigma_{exp}(t)$ can be represented as a sum of true signal $\sigma_{true}(t)$ and random noise $\xi(t)$:

$$\sigma_{exp}(t) = \sigma_{true}(t) + \xi(t)$$

If the random noise has a zero mean and is uncorrelated in time, the rolling average of the data with large enough averaging window size will be:

$$\bar{\sigma}_{exp}(t) = \frac{1}{n+1} \sum_{j=-n}^{0} \sigma_{exp}(t + j\Delta t)$$

$$\cong \frac{1}{n+1} \sum_{j=-n}^{0} \sigma_{true}(t + j\Delta t)$$

The Fourier transform of the averaged signal will then be:

$$\hat{\bar{\sigma}}_{exp}(\omega) \cong \frac{\hat{\bar{\sigma}}_{true}(\omega)}{n+1} \frac{e^{-in\omega\Delta t}(1 - e^{i(n+1)\omega\Delta t})}{1 - e^{i\omega\Delta t}}$$

Applying the same to the measured strain signal $\varepsilon_{exp}(t)$ and calculating the complex modulus:

$$G^*(\omega) = \frac{\hat{\sigma}_{true}(\omega)}{\hat{\varepsilon}_{true}(\omega)} \cong \frac{\hat{\bar{\sigma}}_{exp}(\omega)}{\hat{\bar{\varepsilon}}_{exp}(\omega)}$$

The above equation states that the complex modulus can be accurately retrieved in the low frequency range from the ratio of the Fourier transforms of the average signals.

Second, using a truncated Fourier transform on a fitted fraction of the measured signal will retrieve the complex modulus in the high frequency range:

The truncated Fourier transform of the measured signal $\sigma(t)$ is defined as:

$$\hat{\sigma}(\omega, z) = \frac{1}{2\pi} \int_0^\infty dt \sigma(t) e^{-i\omega t - zt}$$

The truncated Fourier transform of the fitted fraction (from 0 until $t_m$) with a polynomial sum is thus:

$$\hat{\sigma}_{true}(\omega, z) = \int_0^{t_m} (a_0 + a_1 t + a_2 t^2 + \cdots) e^{-i\omega t - zt}$$

which is close to $\hat{\sigma}(\omega) = \frac{1}{2\pi} \int_0^\infty dt \sigma(t) e^{-i\omega t - zt}$ when $\omega \gg z$ and $t_m \gg z^{-1}$.

This indicates that the truncated Fourier transform can be used even on signals that did not reach a steady state as the integral will converge. Thus, it is found that the choice of the probing protocol can lead to a more accurate characterization of the rheological properties. Although it is common to perturb the material by a fast probing and slow relaxation (a step function) for enhancing the signal-to-noise ratio and reaching a steady-state, a slower probing, whether reaching a steady state or not, can gather more reliable data to be used with the truncated Fourier transform.

Accordingly, the use of a truncated Fourier transform is advantageous if one wants to obtain the high-frequency behaviour of deformable bodies. This is particularly important for cells since it is often not possible to repeatedly probe them, as would be required for obtaining the steady-state high-frequency behaviour, without affecting their properties.

In a preferred embodiment, the low-frequency rheological properties are determined using a Fourier transform of an average and/or a medium of the measurement data. The inventors have found that such an average is good for obtaining the mechanical properties in the low-frequency range, as explained previously.

It is preferred the rheological properties of the bodies are determined using a rolling average, preferably a rolling arithmetic average, and/or a rolling median. This is particularly advantageous because a running average is useful to smoothen the fluctuations in the data resulting from noise, in the assumption of uncorrelated noise. A simple arithmetic mean does this in a straightforward and tractable way and is also implemented in most data analysis software packages.

Additionally, it is possible if the low-frequency rheological properties of the bodies are determined using a weighted average, such as a weighted arithmetic average. Such an average allows for placing a particular emphasis on some of the data to be averaged.

It is also preferred if the low-frequency rheological properties of the bodies are determined using an unweighted average, preferably an unweighted arithmetic average. Such an average is easy to implement. By low-frequency rheological properties, the rheological properties in the frequency range where the frequencies are lower than the previously mentioned threshold frequency for defining high frequency rheological properties is meant.

In a preferred embodiment, the rheological properties comprise the frequency dependent complex modulus of the deformable bodies. This quantity is particularly meaningful for such an analysis.

According to another aspect of the invention, as defined in claim 7, an apparatus for determining the rheological properties of bodies is provided. This apparatus comprises a microfluidic channel having an inlet and an outlet which can be used for allowing a fluid having the bodies immersed therein flow therethrough. Furthermore, there is provided a device for measuring the deformation of the bodies due to them being transported through the channel. It is particularly preferred that this device is a camera that observes the channel which is coupled with a computing means which obtains from the images the deformation of the bodies as they are being transported through the channel. It is not necessary that the analysis is done in real time, and it could also be the case that, for example, recorded images are analysed subsequently to the recording.

Additionally, the apparatus comprises a device for analysing the deformation of the bodies due to the transport through the channel so as to obtain rheological properties of the bodies.

The microfluidic channel is arranged to create one or more linear velocity changes, preferably increases, in the fluid as it flows through the channel from the inlet to the outlet. By that, we mean that the fluid has, at least on parts of its flow, a velocity that increases or decreases linearly. The inventors have found that with such a linear increase or decrease of the flow velocity, the high frequency behaviour of the bodies can be particularly efficiently examined since one can have a slow changing application of stress or strain to the bodies to be deformed. This allows for a model-free analysis of the behaviour of the bodies. Whilst previous experimental approaches to determine the viscoelastic properties have tried to apply step-stresses or step-strains in order to simplify the mathematical description, and have failed, because step functions are impossible to realise in an experiment, such limitations are avoided, and one can obtain the rheological properties of the bodies independent of the model. Accordingly, the data that are obtained are more meaningful.

The deformation of the bodies due to them being transported through the channel is measured in those regions of the channel where the one or more linear velocity changes occur.

The apparatus as defined in claim 7 is arranged to carry out the method according to one of the preceding claims, which leads to the advantages that were mentioned previously. It is preferred if the microfluidic channel is arranged to create two or more linear velocity changes. In that way, one can observe the behaviour of the deformable bodies in different velocity change scenarios and can thus obtain a more complete picture of the rheological properties of the deformable bodies. In particular, if the same perturbation is applied more than once, one can investigate more easily the non-linear aspects of the material (which is of particular relevance for biological bodies such as cells). If the perturbations differ, one can investigate a wider range of frequencies if the perturbation is longer or can probe at different frequencies.

It is preferred that the two or more linear velocity increases that are created inside the microfluidic channel lead to different perturbation magnitudes in the bodies. By different perturbation magnitudes, it is meant that the maximum stresses that are each applied by the two or more linear velocity increases differ by a factor of at least two, preferably four. This makes the data more meaningful.

In an embodiment, the microfluidic channel comprises a region having a hyperbolic profile to create the linear velocity change in the fluid. Such a linear velocity change can be particularly easily obtained along the centreline of the fluid flow by having a hyperbolic profile of the channel. By a hyperbolic profile, it is meant that the cross-sectional area of the channel (or, in the case of a channel having a uniform height, the width) describes a hyperbola when moving along the direction of the microfluidic channel.

It is preferred that the channel has a rectangular cross-sectional shape, where the cross-section is measured perpendicular to the centreline of the channel. Such an apparatus and such a channel are particularly easy to manufacture. It is preferred that the height of the channel is constant, which also simplifies manufacture.

Brief Description of the Drawings

Fig. 1 shows the viscoelastic behaviour of a simulated standard linear solid material.

Fig. 2 shows the recovery of viscoelastic properties from time-dependent signals accompanied with random noise.

Fig. 3 shows the simulated and measured stress and strain behaviours or storage and loss moduli for an alternative probing protocol.

Fig. 4 shows rheological measurements of a silicone fluid.

Fig. 5 shows the mechanical properties of a silicone fluid measured with a rheometer.

Fig. 6 shows the channel design of the inventive apparatus.

Fig. 7 shows the resulting extension rate of a deformable object flowing through the hyperbolic regions of the channel shown in Fig. 7.

Detailed Description of the Drawings

Figure 2 shows recovery of viscoelastic properties from time-dependent signals accompanied with random noise. (a) Stress $\sigma$ (black) and strain $\varepsilon$ (gray) signals of an SLS material after applying a rolling average filter (n=20000). (b) Storage G' (dark gray circles) and loss G'' (light gray squares) moduli of an SLS material calculated from the Fourier transforms of the averaged signals in (a) (Eq. (6)). (c) Stress $\sigma$ and strain $\varepsilon$ signals of an SLS material in time accompanied with random noise. The inset shows a fraction of the stress and strain signals and the corresponding sum of a polynomials fit (black). (d) Storage G' and loss G'' moduli of an SLS material where the moduli at low frequencies ($\omega$<20rad/s, indicated by the vertical purple line) are recovered from the moving average filtered stress and strain as shown in (n), and at high frequencies are recovered from the ratio of the truncated Fourier transforms ($z=2s^{-1}$) of the fitted segments of stress and strain (up to $t_m$=2.6s) shown in the inset in (c). The dashed gray lines are the noise-free storage and loss moduli. The other simulation parameters of SLS are the same as in Fig. 1.

As can be seen from Figure 2, an averaging leads to good and reliable recovery of the stress and strain behaviour for the low frequencies. However, as can also be seen from subfigures b) and d), for frequencies higher than about 10rad/s, the data become more and more noisy.

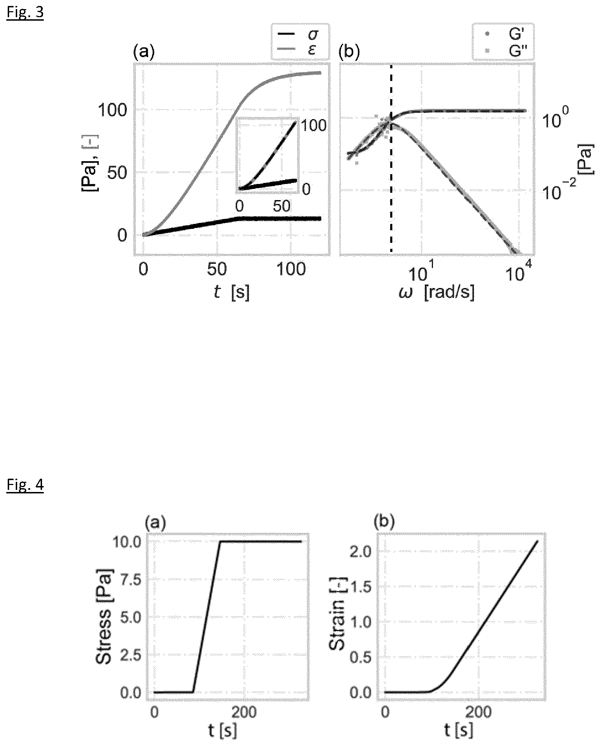

Fig. 3 shows the data for the stress and strain that are obtained using an alternative probing protocol. Here, in box (a), simulated SLS material probed with linear stress $\sigma$=At (black) and its strain response $\varepsilon$ (gray). The inset shows a fraction of the stress and strain signals and the corresponding sum of polynomials fit (black) (b) Storage G' (dark gray circles) and loss G'' (light gray squares) moduli of an SLS material where the moduli at low frequencies ($\omega$<1rad/s), indicated by the vertical purple line) are recovered from the moving average ($n$=20000) filtered stress and strain and at high frequencies are recovered from the ration of the truncated Fourier transforms ($z$=0,4s$^{-1}$) of the fitted segments up to $t_m$=66s) of stress and strain shown in the inset in (a). The dashed gray lines are the noise-free storage and loss moduli. The other simulation parameters of SLS are the same as in Fig. 1.

Although it is common to perturb the material by a fast probing and slow relaxation (a step function) for enhancing the signal-to-noise ratio, a slower probing can gather more reliable data to be used with the truncated Fourier transform. The corresponding fitting of the slower measurement can lead to a better signal-to-noise ratio due to more sampled data. Indeed, in some methods either the stress or the strain can be set by the user (for example, an AFM or a rheometer). And by choosing a predefined signal that perturbs the material in a simple manner, the fitting becomes easier and more accurate. In Fig. 3(a) a linear stress $\sigma(t)$=At is applied to the SLS material, where $A$ is a positive constant. The stress signal is then fitted with a linear function while the strain is fitted with the summation of polynomials (in the example up to the 4$^{th}$ order). The advantage of using a linear stress ramp becomes clear when applying the truncated Fourier transformation on the fitted fraction of the signal. In this case, the fitting process is simplified due to the linearity of the signal and the larger number of data points that can be included in the fit. To confirm that our method works for a wide range of material properties, we verified the method using other mechanical models, such as Kelvin-Voigt, standard linear fluid and power law material. The complex shear modulus of the material is remarkably well recovered in the lower frequency range [below the purple line in Fig. 3(b)] with the rolling average method and at the higher frequencies with the truncated Fourier transform (Fig. 3(b)).

To validate this model, experimental measurements were done using a silicone fluid. We measured the mechanical properties of silicone fluid - AK 1000000 (Wacker, Japan) with an MCR502 Rheometer (Anton Paar, Austria).

We placed a small portion of the fluid (500 units/mL) between two parallel plates with a diameter of 20mm and applied a frequency sweep measurement in the range of 0.025-40Hz. The duration time of the oscillatory method ranged from 15-18mins. Then we performed a time dependent measurement by applying a linear stress ramp with a slope of $\frac{1}{6}$ Pa/s as shown in Fig. 4.)

In Fig. 4, figure (a) shows the time-dependent stress signal applied using the rheometer on a silicone fluid sample between parallel plates, and figure (b) shows the corresponding strain signal.

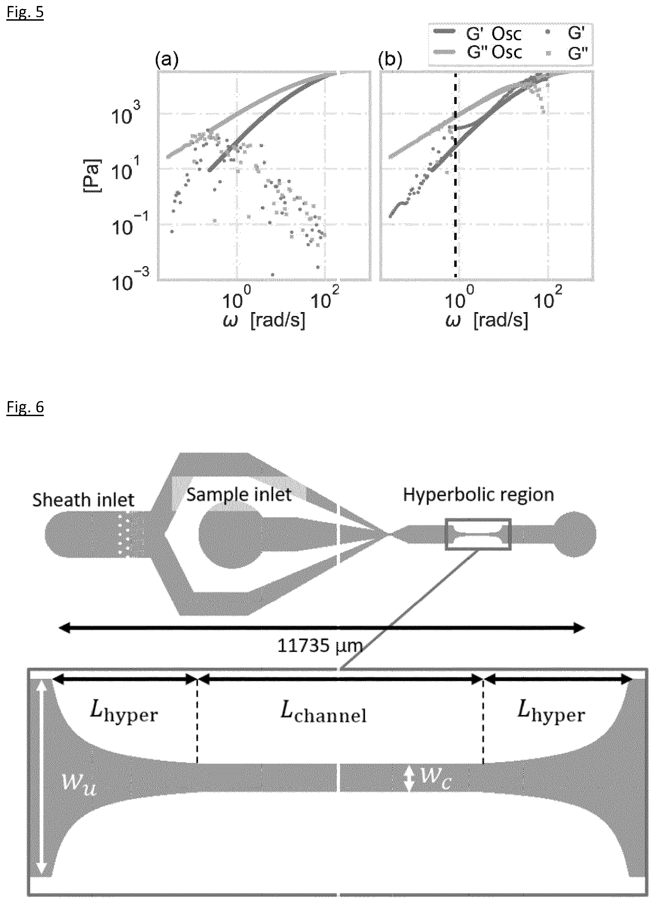

The resulting data are shown in Fig. 5. Storage G' (dark gray line) and loss G'' (light gray line) moduli were recovered directly from the oscillatory stress and strain measurements. (a) Storage G' (dark gray circles) and loss G'' (light gray squares) moduli were calculated directly from the ratio of the Fourier transformed time-dependent linear stress and the corresponding strain signals. (b) Storage G' (dark gray circles) and loss G'' (light gray circles) moduli were recovered in the low frequency range (below the vertical purple line) using a rolling average filter ($n$=120), and at high frequencies from the ratio of the truncated Fourier transforms of the fitted fraction of the applied linear stress and the corresponding strain signals. For this data, the fraction (up to $t_m$=57s) was fitted with a summation of polynomials up to the 9$^{th}$ order. The purple line is considered as the lower useful limit of the truncated Fourier transformation approach ($z$=0.26s$^{-1}$).

Fig. 5 (a) depicts the storage and loss moduli of the silicone fluid measured from the oscillatory stress and strain signals, as well as the moduli calculated from the Fourier transforms applied directly to the linear stress and the corresponding strain signals. It is evident that the moduli cannot be properly retrieved and can even be erroneously assumed to decrease for higher frequencies, if relying directly on the Fourier transforms of the noisy signals. Fig. 5(b) shows, in addition to the moduli from the oscillatory measurement, the storage and loss moduli calculated from a combination of the rolling average (for frequencies below the dashed vertical line) and the truncated Fourier transform applied to the signals fitted (for frequencies above the dashed vertical line). Comparison of the mechanical properties recovered from both approaches shows a dramatic improvement in the recovery of G' and G'' in both low and high frequency ranges.

As can be seen from these measurements, the high frequency rheological properties of the bodies can be accurately obtained also in the high frequency range using the truncated Fourier transform.

Fig. 6 shows, schematically, a microfluidic channel that is used for applying a stress to the bodies. This channel is to be used in a configuration that is, for example, described in WO 2015/024690 A1.

The use of such a microfluidic channel to test the material properties of particles is based on the understanding that a simple test to assess the material properties of particles is to stretch along one axis while simultaneously compressing it perpendicular to that axis with the same stress. This test is known as deformation under planar extension. To achieve planar extension through hydrodynamic stresses, particles must move through a flow field that accelerates along the flow axis in a channel with fixed height. The front part will be already moving faster than the rear part of the particle which leads to a stress stretching along the flow axis. The acceleration along the flow axis and the volume conservation of the liquid in the channel will inevitably also lead to a flow orthogonal to the flow axis which causes a stress effectively compressing the particle perpendicular to the flow axis. More mathematically, the following description holds:

For Newtonian liquids, the resulting stress σ is only dependent on the velocity gradient over the flow axis, from now on defined as x, and the shear viscosity of the ambient fluid η like follows:

$$\sigma = 2 \cdot \eta \cdot \frac{\partial v}{\partial x} = 2 \cdot \eta \cdot \dot{\epsilon}$$

The velocity gradient over *x* is also known as the extension rate $\dot{\varepsilon}$. The axis orthogonal to *x* is defined as *y*. The stress has contributions from the *x*- and *y*-directions which are equal in magnitude but opposite in direction:

$$\sigma_x = 2 \cdot \eta \cdot \dot{\epsilon}$$

$$\sigma_y = -2 \cdot \eta \cdot \dot{\epsilon}$$

These two contributions of the stress can be combined in the net tensile stress $\sigma_T^1$ :

$$\sigma_T = \sigma_x - \sigma_y = 4 \cdot \eta \cdot \dot{\epsilon}$$

The deformation of an object due to a certain stress can be defined by the strain ε, which is the change of the extension of the object:

$$\varepsilon = \frac{l - l_0}{l},$$

where $l$ is the length of the object after deformation and $l_0$ is the original length. The strain connected to the net tensile stress is the net tensile strain $\varepsilon_T$:

$$\varepsilon_T = \varepsilon_x - \varepsilon_y.$$

A simple experiment to access time dependent deformation of materials are creep measurements. Here, the material gets deformed with a constant stress for a certain time. To achieve this in a microfluidic system, the extension rate must be constant. For this, the velocity must increase/decrease linearly along x. Such a system will lead to a symmetric velocity field in a reference frame that is moving with the object through the channel. This so-called hyperbolic flow field will lead to a deformation of an initially spherical object to an ellipsoid that can be characterized with the major axis $A$ and minor axis $B$ (assuming the object elasticity is homogeneous and isotropic). The net tensile strain can then be simply determined from the values $A$ and $B$:

$$\varepsilon_T = \frac{A - B}{\sqrt{A \cdot B}}.$$

For each object, the net tensile stress $\sigma_T$ and strain $\varepsilon_T$ can be evaluated in along the flow axis $x$. The time dependent information of these parameters is derived from the experimental data. With the resulting time-dependent stress and strain curves, one can employ the model described above to derive the frequency dependent complex shear modulus.

Technical Details for Channel design and Imaging

To enable a linear velocity increase over $x$, the channel needs to be appropriately designed. Also, it is not possible to achieve this linear increase for every point in the channel. Therefore, the channel is constructed for a linear velocity increase along the channel centreline ($y=0$, $z=h/2$, with the channel height h). It can be shown that, for a cross-sectional shape of the channel that is rectangular, the channel walls must take up the form of a hyperbola while the channel height is kept constant. The channel width $w$ is constructed with the following equations:

$$w(x) = h' - \left(C_x + \frac{1}{h' - w_c}\right)^{-1}$$

$$h' = 0.63\, h$$

$$C = \frac{2h\dot{\varepsilon}}{3Q}$$

with the constant channel height $h$, the lower channel width $w_C$, and the desired extension rate $\dot{\varepsilon}$ at flow rate Q. See Fig. 6 for an illustration of the channel design. These parameters together with the length of the hyperbolic region $L_{hyper}$ fully define the channel geometry.

Such channels can be produced via standard soft-lithography. A flow is introduced with syringe pumps at a constant flow rate Q. The resulting extensional rate scales linearly with the flow rate.

Besides the extensional stresses arising from the accelerating flow field, objects moving through a microfluidic channel feel shear stresses that arise from the Hagen-Poiseuille flow profile between the channel walls. Also, when objects are close to the channel walls, additional stresses arising from pressures building up between the channel walls and the object surface change the stress profile. To avoid these wall effects, the channels should be designed wide enough so that these stress contributions can be neglected. For example, for blood cells, ranging in diameter from 7.5 - 15 $\mu$m but the exact value depends on the total flow rate in the channel.

Before the objects reach the extensional region, they are centred by a sheath flow that connects the flow from the sample inlet with that from an additional sheath inlet that only provides flow of the ambient fluid without sample, as shown in Figure 6. This feature is desirable to ensure that a great portion of objects flows along the flow centreline. Objects that are more off-centred are less well suited for the stress-strain analysis described above.

In Fig. 6, a length $L_{hyper}$ describes the length over which the channel profile is hyperbolic and in which there is thus, as mentioned previously, a linear change in the flow speed of the fluid at least along the centreline. The parameter $L_{channel}$ relates to the length of the part of the channel that has a constant cross-section and the width $w_C$, which is the minimum width of the channel. The width $w_u$ describes the width of the channel before the hyperbolic region starts. It is to be noted that the total length of 11,735 $\mu$m is nonlimiting, as is the case that, as is shown in Fig. 6, there is a separate sample inlet and a separate sheath inlet, which leads to a sheath flow being arranged around the sample flow so as to centre the sample inside the channel. Since the linear increase/decrease in the flow speed of the fluid occurs along the centreline, having such a centring is advantageous.

For any geometry, the final extension rate scales linearly with the set flow rate. Objects flowing through these channels are measured in a microfluidic chip placed on a stage of an inverted microscope and imaged with a CMOS-camera. Contour detection on the resulting images reveals the position x and the ellipse parameters $A$ and $B$ for every object. The extension rate is then measured by the displacement of objects between different time frames. The viscosity of the ambient solution must be known or measured with a dedicated device. For non-Newtonian solutions, the extensional viscosity needs to be determined and considered in the equation. This yields all parameters to determine the net tensile stress and strain.

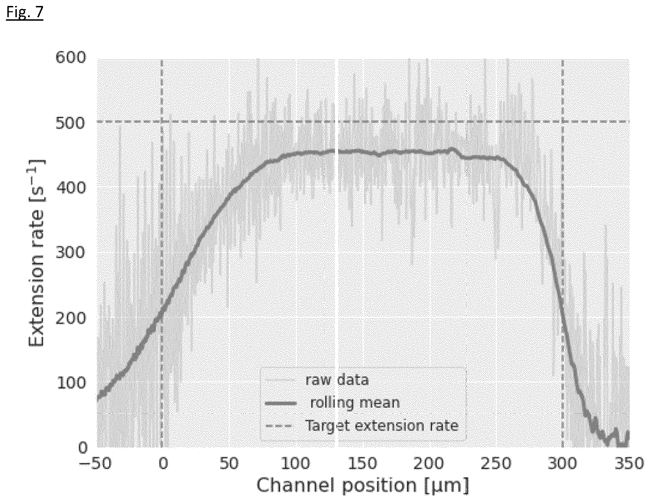

This combination of a specialized channel design to employ extensional stress by avoiding the influence of shear stresses with the dedicated stress-strain relation offers a new tool to precisely measure the material properties of cells, micron-scale droplets, or other deformable particles. The construction formula presented here stands out from previous designs because it was especially adapted for flow along the centreline in channels with a rectangular cross-section. Older designs did not take this into account and the design presented here is superior to ensure a stable extension rate over a long distance in the hyperbolic region. The resulting extension rate of a deformable particle moving through this geometry is shown in Fig. 7. Here, the movement of a particle moving through the channel shown in Fig. 6 was simulated at a flow rate of 0.15$\mu$1/s to reach a target extension rate of 500 s$^{-1}$.

List of references

1. Fall, A., N. Huang, F. Bertrand, G. Ovarlez, and D. Bonn, 2008. Shear Thickening of Cornstarch Suspensions as a Reentrant Jamming Transition. Physical Review Letters 100:018301.

2. Beaune, G., T. V. Stirbat, N. Khalifat, O. Cochet-Escartin, S. Garcia, V. V. Gurchenkov, M. P. Murrell, S. Dufour, D. Cuvelier, and F. Brochard-Wyart, 2014. How cells flow in the spreading of cellular aggregates. Proceedings of the National Academy of Sciences 111:8055-8060.

3. Douezan, S., K. Guevorkian, R. Naouar, S. Dufour, D. Cuvelier, and F. Brochard-Wyart, 2011. Spreading dynamics and wetting transition of cellular aggregates. Proceedings of the National Academy of Sciences 108:7315-7320.

4. Kuan, H.-S., W. Pönisch, F. Jülicher, and V. Zaburdaev, 2021. Continuum Theory of Active Phase Separation in Cellular Aggregates. Physical Review Letters 126:018102.

5. Lakes, R. S., 1998. Viscoelastic solids, volume 9. CRC press.

6. Fabry, B., G. N. Maksym, J. P. Butler, M. Glogauer, D. Navajas, and J. J. Fredberg, 2001. Scaling the microrheology of living cells. Physical review letters 87:148102.

7. Nematbakhsh, Y., and C. T. Lim, 2015. Cell biomechanics and its applications in human disease diagnosis. Acta Mechanica Sinica 31:268-273.

8. Lee, G. Y., and C. T. Lim, 2007. Biomechanics approaches to studying human diseases. Trends in biotechnology 25:111-118.

9. Crocker, J. C., M. T. Valentine, E. R. Weeks, T. Gisler, P. D. Kaplan, A. G. Yodh, and D. A. Weitz, 2000. Two-Point Microrheology of Inhomogeneous Soft Materials. Physical Review Letters 85:888-891.

10. Mason, T. G., K. Ganesan, J. H. van Zanten, D. Wirtz, and S. C. Kuo, 1997. Particle tracking microrheology of complex fluids. Physical review letters 79:3282.

11. Rand, R. P., and A. Burton, 1964. Mechanical properties of the red cell membrane: I. Membrane stiffness and intracellular pressure. Biophysical journal 4:115-135.

12. Hochmuth, R. M., 2000. Micropipette aspiration of living cells. Journal of biomechanics 33:15-22.

13. Alcaraz, J., L. Buscemi, M. Grabulosa, X. Trepat, B. Fabry, R. Farré, and D. Navajas, 2003. Microrheology of human lung epithelial cells measured by atomic force microscopy. Biophysical journal 84:2071-2079.

14. Rother, J., H. Nöding, I. Mey, and A. Janshoff, 2014. Atomic force microscopy-based microrheology reveals significant differences in the viscoelastic response between malign and benign cell lines. Open biology 4:140046.

15. Guck, J., R. Ananthakrishnan, H. Mahmood, T. J. Moon, C. C. Cunningham, and J. Käs, 2001. The optical stretcher: a novel laser tool to micromanipulate cells. Biophysical journal 81:767-784.

16. Otto, O., P. Rosendahl, A. Mietke, S. Golfier, C. Herold, D. Klaue, S. Girardo, S. Pagliara, A. Ekpenyong, A. Jacobi, et al., 2015. Real-time deformability cytometry: on-the-fly cell mechanical phenotyping. Nature methods 12:199-202.

17. Darling, E. M., and D. Di Carlo, 2015. High-throughput assessment of cellular mechanical properties. Annual review of biomedical engineering 17:35-62.

18. Charras, G. T., and M. A. Horton, 2002. Single cell mechanotransduction and its modulation analyzed by atomic force microscope indentation. Biophysical journal 82:2970-2981.

19. Booth-Gauthier, E. A., T. A. Alcoser, G. Yang, and K. N. Dahl, 2012. Force-induced changes in subnuclear movement and rheology. Biophysical journal 103:2423-2431.

20. Viljoen, A., M. Mathelié-Guinlet, A. Ray, N. Strohmeyer, Y. J. Oh, P. Hinterdorfer, D. J. Müller, D. Alsteens, and Y. F. Dufrêne, 2021. Force spectroscopy of single cells using atomic force microscopy. Nature Reviews Methods Primers 1:1-24.

21. Alcaraz, J., L. Buscemi, M. Puig-de Morales, J. Colchero, A. Baro, and D. Navajas, 2002. Correction of microrheological measurements of soft samples with atomic force microscopy for the hydrodynamic drag on the cantilever. Langmuir 18:716-721.

22. Rigato, A., A. Miyagi, S. Scheuring, and F. Rico, 2017. High-frequency microrheology reveals cytoskeleton dynamics in living cells. Nature physics 13:771-775.

23. Broedersz, C. P., and F. C. MacKintosh, 2014. Modeling semiflexible polymer networks. Reviews of Modern Physics 86:995.

24. Darling, E., S. Zauscher, and F. Guilak, 2006. Viscoelastic properties of zonal articular chondrocytes measured by atomic force microscopy. Osteoarthritis and cartilage 14:571-579.

25. Darling, E. M., S. Zauscher, J. A. Block, and F. Guilak, 2007. A thin-layer model for viscoelastic, stress-relaxation testing of cells using atomic force microscopy: do cell properties reflect metastatic potential? Biophysical journal 92:1784-1791.

26. Ekpenyong, A. E., G. Whyte, K. Chalut, S. Pagliara, F. Lautenschläger, C. Fiddler, S. Paschke, U. F. Keyser, E. R. Chilvers, and J. Guck, 2012. Viscoelastic properties of differentiating blood cells are fate-and function-dependent. PloS one 7:e45237.

27. Moreno-Flores, S., R. Benitez, M. dM Vivanco, and J. L. Toca-Herrera, 2010. Stress relaxation and creep on living cells with the atomic force microscope: a means to calculate elastic moduli and viscosities of cell components. Nanotechnology 21:445101.

28. Lin, C.-Y., 2020. Alternative form of standard linear solid model for characterizing stress relaxation and creep: including a novel parameter for quantifying the ratio of fluids to solids of a viscoelastic solid. Frontiers in materials 7:11.

29. Fregin, B., F. Czerwinski, D. Biedenweg, S. Girardo, S. Gross, K. Aurich, and O. Otto, 2019. High-throughput single-cell rheology in complex samples by dynamic real-time deformability cytometry. Nature communications 10:1-11.

30. Evans, R., M. Tassieri, D. Auhl, and T. A. Waigh, 2009. Direct conversion of rheological compliance measurements into storage and loss moduli. Physical Review E 80:012501.

31. Kwon, M. K., S. H. Lee, S. G. Lee, and K. S. Cho, 2016. Direct conversion of creep data to dynamic moduli. Journal of Rheology 60:1181-1197.

**Claims**

1. Method for determining rheological properties of deformable bodies, the method comprising:

    - leading the bodies in an immersion fluid through a microfluidic channel,
    - measuring the deformation of those bodies by the forces exerted on the bodies due the hydrodynamic interactions with the surrounding fluid,
    - determining the rheological properties of the bodies using the measurements of the deformation,

    the method being **characterized in that**

    the high frequency rheological properties of the bodies are determined using a truncated Fourier transform of the measurement data of the deformation, wherein high-frequency rheological properties are those rheological properties that are determined at a higher frequency than a predetermined threshold frequency, and wherein a truncated Fourier transform of a measured signal $\sigma(t)$ is defined as

$$\hat{\sigma}(\omega, z) = \frac{1}{2\pi} \int_0^\infty dt\sigma(t)e^{-i\omega t - zt}$$

    where z is a non-negative real number,
    wherein the rheological properties comprise the frequency dependent complex modulus of the deformable bodies,
    wherein $\omega$ is the angular frequency, and
    wherein t is the time.

2. Method according to claim 1, wherein the low frequency rheological properties of the bodies are determined using a Fourier transform of an average and/or a median of the measurement data.

3. Method according to claim 2, wherein the low frequency rheological properties of the bodies are determined using a rolling average, preferably a rolling arithmetic average, and/or a rolling median.

4. Method according to claim 2, wherein the low frequency rheological properties of the bodies are determined using a weighted average, preferably a weighted arithmetic average.

5. Method according to claim 2, wherein the low frequency rheological properties of the bodies are determined using an unweighted average, preferably an unweighted arithmetic average.

6. Method according to one of one of the preceding claims, wherein the rheological properties comprise the frequency dependent complex modulus of the deformable bodies.

7. Apparatus for determining rheological properties of deformable bodies, the apparatus comprising:

    - a microfluidic channel having an inlet and an outlet, the channel being arranged for letting a fluid having the bodies immersed therein flow therethrough,
    - a device for measuring the deformation of the bodies due to them being transported through the channel, and
    - a device for analysing the data regarding the deformation of the bodies due to the transport through the channel so as to obtain rheological properties of the bodies,
- wherein the microfluidic channel is arranged to create one or more linear velocity changes, preferably increases and/or decreases, in the fluid as it flows through the channel,

wherein the apparatus is arranged for carrying out the method according to one of the preceding claims.

**8.** Apparatus according to claim 7, wherein the microfluidic channel is arranged to create two or more linear velocity changes in the fluid as it flows through the channel.

**9.** Apparatus according to claim 8, wherein the two or more linear velocity increases that are created inside the microfluidic channel lead to different perturbation magnitudes in the bodies.

**10.** Apparatus according to one of claims 7 to 9, wherein the channel comprises a region having a hyperbolic profile to create the linear velocity change in the fluid.

**11.** Apparatus according to one of claims 7 to 10, wherein the channel has a rectangular cross-sectional shape.

**Patentansprüche**

**1.** Verfahren zum Bestimmen rheologischer Eigenschaften verformbarer Körper, wobei das Verfahren Folgendes umfasst:

- Führen der Körper in einer Immersionsflüssigkeit durch einen mikrofluidischen Kanal,
- Messen der Verformung dieser Körper durch die auf die Körper ausgeübten Kräfte aufgrund der hydrodynamischen Wechselwirkungen mit der umgebenden Flüssigkeit,
- Bestimmen der rheologischen Eigenschaften der Körper unter Verwendung der Messungen der Verformung,

wobei das Verfahren durch Folgendes gekennzeichnet ist:

das Bestimmen der hochfrequenten rheologischen Eigenschaften der Körper unter Verwendung einer trunkierten Fourier-Transformation der Messdaten der Verformung, wobei hochfrequente rheologische Eigenschaften solche rheologischen Eigenschaften sind, die bei einer höheren Frequenz als einer vorbestimmten Schwellenfrequenz bestimmt werden, und wobei eine trunkierte Fourier-Transformation eines gemessenen Signals $\sigma(t)$ definiert ist als

$$\hat{\sigma}(\omega, z) = \frac{1}{2\pi} \int_0^\infty dt \sigma(t) e^{-i\omega t - zt}$$

wobei z eine nicht-negative reelle Zahl ist,
wobei die rheologischen Eigenschaften den frequenzabhängigen Komplexmodul der verformbaren Körper umfassen,
wobei $\omega$ die Kreisfrequenz ist, und
wobei t die Zeit bezeichnet.

**2.** Verfahren nach Anspruch 1, wobei die niederfrequenten rheologischen Eigenschaften der Körper unter Verwendung einer Fourier-Transformation eines Mittelwerts und/oder eines Medians der Messdaten bestimmt werden.

**3.** Verfahren nach Anspruch 2, wobei die niederfrequenten rheologischen Eigenschaften der Körper unter Verwendung eines gleitenden Mittelwerts, bevorzugt eines gleitenden arithmetischen Mittelwerts, und/oder eines gleitenden Medians bestimmt werden.

**4.** Verfahren nach Anspruch 2, wobei die niederfrequenten rheologischen Eigenschaften der Körper unter Verwendung eines gewichteten Mittelwerts, bevorzugt eines gewichteten arithmetischen Mittelwerts, bestimmt werden.

**5.** Verfahren nach Anspruch 2, wobei die niederfrequenten rheologischen Eigenschaften der Körper unter Verwendung eines ungewichteten Mittelwerts, bevorzugt eines ungewichteten arithmetischen Mittelwerts, bestimmt werden.

6. Verfahren nach einem der vorstehenden Ansprüche, wobei die rheologischen Eigenschaften den frequenzabhängigen Komplexmodul der verformbaren Körper umfassen.

7. Einrichtung zum Bestimmen rheologischer Eigenschaften verformbarer Körper, wobei die Einrichtung Folgendes umfasst:

   - einen mikrofluidischen Kanal, der einen Einlass und einen Auslass aufweist, wobei der Kanal dazu eingerichtet ist, eine Flüssigkeit, in die die Körper eingetaucht sind, hindurchfließen zu lassen,
   - eine Vorrichtung zum Messen der Verformung der Körper aufgrund dessen, dass sie durch den Kanal transportiert werden, und
   - eine Vorrichtung zur Analyse der Daten bezüglich der Verformung der Körper aufgrund des Transports durch den Kanal, um rheologische Eigenschaften der Körper zu erhalten,
   - wobei der mikrofluidische Kanal dazu eingerichtet ist, eine oder mehrere lineare Geschwindigkeitsänderungen, bevorzugt lineare Geschwindigkeitszunahmen und/oder -abnahmen, in der Flüssigkeit zu erzeugen, während sie durch den Kanal fließt,

   wobei die Einrichtung zur Durchführung des Verfahrens nach einem der vorstehenden Ansprüche eingerichtet ist.

8. Einrichtung nach Anspruch 7, wobei der mikrofluidische Kanal dazu eingerichtet ist, zwei oder mehr lineare Geschwindigkeitsänderungen in der Flüssigkeit zu erzeugen, während sie durch den Kanal fließt.

9. Einrichtung nach Anspruch 8, wobei die zwei oder mehr linearen Geschwindigkeitszunahmen, die innerhalb des mikrofluidischen Kanals erzeugt werden, zu unterschiedlichen Störstärken in den Körpern führen.

10. Einrichtung nach einem der Ansprüche 7 bis 9, wobei der Kanal einen Bereich mit hyperbolischem Profil umfasst, um die lineare Geschwindigkeitsänderung in der Flüssigkeit zu erzeugen.

11. Einrichtung nach einem der Ansprüche 7 bis 10, wobei der Kanal eine rechteckige Querschnittsform aufweist.

**Revendications**

1. Procédé permettant de déterminer les propriétés rhéologiques de corps déformables, le procédé comprenant :

   - le fait de conduire les corps dans un fluide d'immersion à travers un canal microfluidique,
   - le fait de mesurer la déformation de ces corps par les forces exercées sur les corps, dues aux interactions hydrodynamiques avec le fluide environnant,
   - le fait de déterminer les propriétés rhéologiques des corps en utilisant les mesures de la déformation,

   le procédé étant **caractérisé en ce que**

   les propriétés rhéologiques à hautes fréquences des corps sont déterminées en utilisant une transformée de Fourier tronquée des données de mesure de la déformation, dans lequel les propriétés rhéologiques à hautes fréquences sont ces propriétés rhéologiques qui sont déterminées à une fréquence supérieure à une fréquence seuil prédéterminée, et dans lequel une transformée de Fourier tronquée d'un signal mesuré σ(t) est définie comme

$$\hat{\sigma}(\omega, z) = \frac{1}{2\pi} \int_0^\infty dt\, \sigma(t) e^{-i\omega t - zt}$$

   où z est un nombre réel non négatif,
   dans laquelle les propriétés rhéologiques comprennent le module complexe dépendant de la fréquence des corps déformables,
   dans laquelle $\omega$ est la pulsation angulaire, et
   dans laquelle t est le temps.

2. Procédé selon la revendication 1, dans lequel les propriétés rhéologiques à basses fréquences des corps sont déterminées en utilisant une transformée de Fourier d'une moyenne et/ou d'une médiane des données de mesure.

3. Procédé selon la revendication 2, dans lequel les propriétés rhéologiques à basses fréquences des corps sont déterminées en utilisant une moyenne mobile, de préférence une moyenne arithmétique mobile, et/ou une médiane mobile.

4. Procédé selon la revendication 2, dans lequel les propriétés rhéologiques à basses fréquences des corps sont déterminées en utilisant une moyenne pondérée, de préférence une moyenne arithmétique pondérée.

5. Procédé selon la revendication 2, dans lequel les propriétés rhéologiques à basses fréquences des corps sont déterminées en utilisant une moyenne non pondérée, de préférence une moyenne arithmétique non pondérée.

6. Procédé selon l'une des revendications précédentes, dans lequel les propriétés rhéologiques comprennent le module complexe dépendant de la fréquence des corps déformables.

7. Appareil permettant de déterminer les propriétés rhéologiques de corps déformables, l'appareil comprenant :

- un canal microfluidique, présentant une entrée et une sortie, le canal étant agencé de manière à laisser un fluide présentant les corps immergés dans celui-ci s'écouler à travers celui-ci,
- un dispositif permettant de mesurer la déformation des corps résultant du fait qu'ils sont transportés à travers le canal, et
- un dispositif permettant d'analyser les données concernant la déformation des corps résultant du transport à travers le canal de façon à obtenir des propriétés rhéologiques des corps,
- dans lequel le canal microfluidique est agencé de manière à créer une ou plusieurs variations linéaires de vitesse, de préférence des augmentations linéaires de vitesse et/ou des diminutions linéaires de vitesse, dans le fluide lorsqu'il s'écoule à travers le canal,

dans lequel l'appareil est conçu de manière à mettre en œuvre le procédé selon l'une des revendications précédentes.

8. Appareil selon la revendication 7, dans lequel le canal microfluidique est agencé de manière à créer deux ou plusieurs variations linéaires de vitesse dans le fluide lorsqu'il s'écoule à travers le canal.

9. Appareil selon la revendication 8, dans lequel les deux ou plusieurs augmentations linéaires de vitesse qui sont créées à l'intérieur du canal microfluidique conduisent à différentes amplitudes de perturbation dans les corps.

10. Appareil selon l'une des revendications 7 à 9, dans lequel le canal comprend une région présentant un profil hyperbolique pour créer la variation linéaire de vitesse dans le fluide.

11. Appareil selon l'une des revendications 7 à 10, dans lequel le canal présente une forme de section transversale rectangulaire.

Fig. 1

Fig. 2

1

EP 4 296 645 B1

Fig. 3

Fig. 4

16

Fig. 5

Fig. 6

Fig. 7

# EP 4 296 645 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2016202172 A1
- US 2003097040 A1
- US 2019085324 A1
- WO 2015024690 A1

### Non-patent literature cited in the description

- Extensional Flow Properties and Their Measurement. **DEALY, J.M.** ; **WISSBRUN, K.F.** Melt Rheology and Its Role in Plastics Processing. Springer, 1999
- **FALL, A.** ; **N. HUANG** ; **F. BERTRAND** ; **G. OVARLEZ** ; **D. BONN**. Shear Thickening of Cornstarch Suspensions as a Reentrant Jamming Transition. *Physical Review Letters*, 2008, vol. 100, 018301
- **BEAUNE, G.** ; **T. V. STIRBAT** ; **N. KHALIFA** ; **O. COCHET-ESCARTIN** ; **S. GARCIA** ; **V. V. GURCH-ENKOV** ; **M. P. MURRELL** ; **S. DUFOUR** ; **D. CUVELIER** ; **F. BROCHARD-WYART**. How cells flow in the spreading of cellular aggregates.. *Proceedings of the National Academy of Sciences*, 2014, vol. 111, 8055-8060
- **DOUEZAN, S** ; **K. GUEVORKIAN** ; **R. NAOUAR** ; **S. DUFOUR** ; **D. CUVELIER** ; **F. BROCHARD-WYART**. Spreading dynamics and wetting transition of cellular aggregates. *Proceedings of the National Academy of Sciences*, 2011, vol. 108, 7315-7320
- **KUAN, H.-S.** ; **W. PÖNISCH** ; **F. JÜLICHER** ; **V. ZABURDAEV**. Continuum Theory of Active Phase Separation in Cellular Aggregates.. *Physical Review Letters*, 2021, vol. 126, 018102
- **LAKES, R. S**. Viscoelastic solids. CRC press, 1998, vol. 9
- **FABRY, B.** ; **G. N. MAKSYM** ; **J. P. BUTLER** ; **M. GLOGAUER** ; **D. NAVAJAS** ; **J. J. FREDBERG**. Scaling the microrheology of living cells. *Physical review letters*, 2001, vol. 87, 148102
- **NEMATBAKHSH, Y.** ; **C. T. LIM**. Cell biomechanics and its applications in human disease diagnosis. *Acta Mechanica Sinica*, 2015, vol. 31, 268-273
- **LEE, G. Y** ; **C. T. LIM**. Biomechanics approaches to studying human diseases.. *Trends in biotechnology*, 2007, vol. 25, 111-118
- **CROCKER, J. C** ; **M. T. VALENTINE** ; **E. R. WEEKS** ; **T. GISLER** ; **P. D. KAPLAN** ; **A. G. YODH** ; **D. A. WEITZ**. Two-Point Microrheology of Inhomogeneous Soft Materials. *Physical Review Letters*, 2000, vol. 85, 888-891

- **MASON, T. G** ; **K. GANESAN** ; **J. H. VAN ZANTEN** ; **D. WIRTZ** ; **S. C. KUO**. Particle tracking microrheology of complex fluids. *Physical review letters*, 1997, vol. 79, 3282
- **RAND, R. P** ; **A. BURTON**. Mechanical properties of the red cell membrane: I. Membrane stiffness and intracellular pressure. *Biophysical journal*, 1964, vol. 4, 115-135
- **HOCHMUTH, R. M**. Micropipette aspiration of living cells. *Journal of biomechanics*, 2000, vol. 33, 15-22
- **ALCARAZ, J.** ; **L. BUSCEMI** ; **M. GRABULOSA** ; **X. TREPAT** ; **B. FABRY** ; **R. FARRÉ** ; **D. NAVAJAS**. Microrheology of human lung epithelial cells measured by atomic force microscopy.. *Biophysical journal*, 2003, vol. 84, 2071-2079
- **ROTHER, J.** ; **H. NÖDING** ; **I. MEY** ; **A. JANSHOFF**. Atomic force microscopy-based microrheology reveals significant differences in the viscoelastic response between malign and benign cell lines. *Open biology*, 2014, vol. 4, 140046
- **GUCK, J** ; **R. ANANTHAKRISHNAN** ; **H. MAHMOOD** ; **T. J. MOON** ; **C. C. CUNNINGHAM** ; **J. KÄS**. The optical stretcher: a novel laser tool to micromanipulate cells.. *Biophysical journal*, 2001, vol. 81, 767-784
- **OTTO, O** ; **P. ROSENDAHL** ; **A. MIETKE** ; **S. GOLFIER** ; **C. HEROLD** ; **D. KLAUE** ; **S. GIRARDO** ; **S. PAGLIARA** ; **A. EKPENYONG** ; **A. JACOBI et al.** Real-time deformability cytometry: on-the-fly cell mechanical phenotyping.. *Nature methods*, 2015, vol. 12, 199-202
- **DARLING, E. M** ; **D. DI CARLO**. High-throughput assessment of cellular mechanical properties.. *Annual review of biomedical engineering*, 2015, vol. 17, 35-62
- **CHARRAS, G. T** ; **M. A. HORTON**. Single cell mechanotransduction and its modulation analyzed by atomic force microscope indentation.. *Biophysical journal*, 2002, vol. 82, 2970-2981

- **BOOTH-GAUTHIER, E. A** ; **T. A. ALCOSER** ; **G. YANG** ; **K. N. DAHL**. Force-induced changes in subnuclear movement and rheology.. *Biophysical journal*, 2012, vol. 103, 2423-2431
- **VILJOEN, A.** ; **M. MATHELIÉ-GUINLET** ; **A. RAY** ; **N. STROHMEYER** ; **Y. J. OH** ; **P. HINTERDORFER** ; **D. J. MÜLLER** ; **D. ALSTEENS** ; **Y. F. DUFRÊNE**. orce spectroscopy of single cells using atomic force microscopy. *Nature Reviews Methods Primers*, 2021, vol. 1, 1-24
- **ALCARAZ, J.** ; **L. BUSCEMI** ; **M. PUIG-DE MOR-ALES** ; **J. COLCHERO** ; **A. BARO** ; **D. NAVAJAS**. Correction of microrheological measurements of soft samples with atomic force microscopy for the hydrodynamic drag on the cantilever. *Langmuir*, 2002, vol. 18, 716-721
- **RIGATO, A** ; **A. MIYAGI** ; **S. SCHEURING** ; **F. RICO**. High-frequency microrheology reveals cytoskeleton dynamics in living cells.. *Nature physics*, 2017, vol. 13, 771-775
- **BROEDERSZ, C. P** ; **F. C. MACKINTOSH**. Modeling semiflexible polymer networks. *Reviews of Modern Physics*, 2014, vol. 86, 995
- **DARLING, E** ; **S. ZAUSCHER** ; **F. GUILAK**. Viscoelastic properties of zonal articular chondrocytes measured by atomic force microscopy.. *Osteoarthritis and cartilage*, 2006, vol. 14, 571-579
- **DARLING, E. M** ; **S. ZAUSCHER** ; **J. A. BLOCK** ; **F. GUILAK**. A thin-layer model for viscoelastic, stress-relaxation testing of cells using atomic force microscopy: do cell properties reflect metastatic potential?. *Biophysical journal*, 2007, vol. 92, 1784-1791
- **EKPENYONG, A. E** ; **G. WHYTE** ; **K. CHALUT** ; **S. PAGLIARA** ; **F. LAUTENSCHLÄGER** ; **C. FIDDLER** ; **S. PASCHKE** ; **U. F. KEYSER** ; **E. R. CHILVERS** ; **J. GUCK**. Viscoelastic properties of differentiating blood cells are fate-and function-dependent. *PloS one*, 2012, vol. 7, e45237
- **MORENO-FLORES, S.** ; **R. BENITEZ** ; **M. DM VIVANCO** ; **J. L. TOCA-HERRERA**. Stress relaxation and creep on living cells with the atomic force microscope: a means to calculate elastic moduli and viscosities of cell components. *Nanotechnology*, 2010, vol. 21, 445101
- **LIN, C.-Y.** Alternative form of standard linear solid model for characterizing stress relaxation and creep: including a novel parameter for quantifying the ratio of fluids to solids of a viscoelastic solid. *Frontiers in materials*, 2020, vol. 7, 11
- **FREGIN, B.** ; **F. CZERWINSKI** ; **D. BIEDENWEG** ; **S. GIRARDO** ; **S. GROSS** ; **K. AURICH** ; **O. OTTO**. High-throughput single-cell rheology in complex samples by dynamic real-time deformability cytometry. *Nature communications*, 2019, vol. 10, 1-11
- **EVANS, R** ; **M. TASSIERI** ; **D. AUHL** ; **T. A. WAIGH**. Direct conversion of rheological compliance measurements into storage and loss moduli.. *Physical Review E*, 2009, vol. 80, 012501
- **KWON, M. K.** ; **S. H. LEE** ; **S. G. LEE** ; **K. S. CHO**. Direct conversion of creep data to dynamic moduli. *Journal of Rheology*, 2016, vol. 60, 1181-1197